# EUROPÄISCHE PATENTANMELDUNG

(11) **EP 4 818 564 A1**
(43) Veröffentlichungstag der Anmeldung: **07.10.2026**
(21) Anmeldenummer: 26160401.1
(22) Anmeldetag: 24.02.2026
(51) Int. Cl.: F16L 19/028

(54) **ROHRVERBINDUNG**

(30) Priorität: 04.04.2025 DE 102025113419; 23.05.2025 DE 102025120191
(71) Anmelder: VOSS Fluid GmbH, 51688 Wipperfürth (DE)
(72) Erfinder: WASSERFUHR, Philipp, 51688 Wipperfürth (DE); BERGHAUS, Gerd, 51515 Kürten (DE); HESS, Jochem-Andreas, 51688 Wipperfürth (DE)
(74) Vertreter: Dr. Solf & Zapf Patent- und Rechtsanwalts PartG mbB

(57) **Zusammenfassung**

Die vorliegende Erfindung betrifft eine Rohrverbindung (1) mit einer Rohrleitung (2), mit einem Anschlussstutzen (5), mit einem Überwurf-Verschraubungsteil (8) und mit einem Klemmring (12), sowie einen Klemmring (12) für eine solche Rohrverbindung (1). Die Rohrverbindung (1) und der Klemmring (12) sind verbessert, indem im unverpressten Zustand (UZ) eine zur Anschlagfläche (3) der Rohrleitung (2) weisende Gegenfläche (14) des Klemmrings (12) auch der Mittenlängsachse (L) zugewandt ist und einen Anschlag-Winkel (γ) größer Null zu einer zur Mittenlängsachse (L) senkrechten Ebene (E) aufweist, wobei im unverpressten Zustand (UZ) eine zur Spannfläche (11) weisende Anlagefläche (15) des Klemmrings (12) einen Anlage-Winkel (α) zu der zur Mittenlängsachse (L) senkrechten Ebene (E) aufweist, der größer als der Spannflächen-Winkel (ε) ist, wobei die innere Umfangsfläche (13) einen der Gegenfläche (14) zugewandten Freistell-Bereich (16) und einen der Gegenfläche (14) abgewandten Klemm-Bereich (17) aufweist, wobei ein Durchmesser der inneren Umfangsfläche (13) entgegen einer zur Anschlagfläche (3) hinweisenden Montagerichtung (M) im Freistell-Bereich (16) mit einem Freistell-Winkel (δ) zur Mittenlängsachse (L) abnimmt und im Klemm-Bereich (17) mit einem Klemm-Winkel (β) zur Mittenlängsachse (L) zunimmt, wobei eine axiale Länge (l₁₆) des Freistell-Bereiches (16) kleiner als eine axiale Länge (l₁₇) des Klemm-Bereich (17) ist.

## Beschreibung

Die Erfindung betrifft eine Rohrverbindung gemäß dem Oberbegriff des Anspruchs 1 und einen Klemmring für eine solche Rohrverbindung.

Im Stand der Technik sind Rohrverbindungen mit einer Rohrleitung, mit einem Anschlussstutzen, mit einem Überwurf-Verschraubungsteil und mit einem Klemmring bekannt. Der Anschlussstutzen weist eine Anschlussfläche auf, mittels welcher der Anschlussstutzen gegenüber der Rohrleitung abgedichtet ist. Die Rohrleitung weist einen umgeformten, eine Anschlagfläche aufweisenden Verbindungsabschnitt auf. Die Anschlussfläche des Anschlussstutzens kontaktiert zur Abdichtung einen Außenumfang des Verbindungsabschnitts der Rohrleitung. Der Anschlussstutzen weist ein Anschlussgewinde und eine Anschlussbohrung auf. Das Überwurf-Verschraubungsteil weist ein Spanngewinde und eine Durchgangsöffnung auf. Die Durchgangsöffnung weist am Innenumfang eine Spannfläche auf. Die Spannfläche ist einer Mittenlängsachse der Rohrverbindung zugewandt und weist einen Spannflächen-Winkel zu einer zur Mittenlängsachse senkrechten Ebene auf. Der Klemmring ist mit einer inneren Umfangsfläche zur Rohrleitung weisend in der Durchgangsöffnung des Überwurf-Verschraubungsteils zwischen der Spannfläche des Überwurf-Verschraubungsteils und der Anschlagfläche der Rohrleitung angeordnet. Der Klemmring ist durch Verbinden des Überwurf-Verschraubungsteils mit dem Anschlussstutzen mit Hilfe des Anschlussgewindes und des Spanngewindes von einem unverpressten Zustand in einen verpressten Zustand plastisch und/oder elastisch verformbar.

Oben beschriebene Rohrverbindungen werden zum Beispiel bei hydraulischen Systemen im Maschinen- und Fahrzeugbau verwendet. Derartige Rohrverbindungen werden für Rohrleitungen mit Rohrdrücken von bis zu 800 bar verwendet. Damit bei diesen Rohrdrücken die Dichtheit der Rohrverbindung zuverlässig gewährleistet ist, müssen ausreichend große axiale Spannkräfte durch das Überwurf-Verschraubungsteil auf den Verbindungsabschnitt der Rohrleitung, insbesondere auf die Anschlagfläche und auf die Anschlussfläche des Anschlussstutzens, übertragen werden.

Eine Problematik bei diesen Formsystemen besteht darin, dass im Bereich der Umformung der Rohrleitung eine starke Kaltverfestigung im Stahl eintritt. Die lokale Kaltverfestigung und die plötzliche Querschnittsveränderung an der Rohrleitung erzeugen eine Empfindlichkeit für Kerbwirkung im Bereich des Übergangs der Wandung der Rohrleitung zu der umgeformten Anschlagfläche. Besonders bei Biegewechselbelastungen zeigt sich diese Problematik als Schwachstelle des Systems. Im Stand der Technik werden insbesondere geschlitzte Klemmringe verwendet, die eine Verformung des Klemmrings durch den Schlitz erleichtern. Fallen die Belastungen jedoch genau in die Richtung des Schlitzes, ist diese Lösung nicht optimal. Außerdem zeigt der Ring kein symmetrisches Vorformungsverhalten, was zu einer ungleichmäßigen Einspannung des Rohres führt.

Eine weitere Rohrverbindung mit einem Klemmring ist z.B. in der DE10 2022 101 924 A1 beschrieben. Der Klemmring weist ein einstückig geschlossenes Ringprofil auf. Der Klemmring weist einen Außenumfang mit radial geöffneten Ausnehmungen auf. Der Klemmring lässt sich u.a. aufgrund der radial geöffneten Ausnehmungen verformen und in das Überwurf-Verschraubungsteil einpressen, um eine Unverlierbarkeit des Klemmrings sicherzustellen. Durch einen Einpressvorgang wird der Klemmring axial gegen die Montagerichtung weisend mit der Anlagefläche gegen die Spannfläche verpresst. Daraus resultiert eine plastische Verformung des Klemmrings, so dass der Klemmring in der Durchgangsöffnung des Überwurf-Verschraubungsteils gehalten ist. Zweckmäßig geschieht dies in einem Einpresswerkzeug in einem Vormontageschritt, wobei in einem ersten Schritt der Klemmring und das Überwurf-Verschraubungsteil koaxial auf einem Einpressdorn angeordnet und in einem Folgeschritt gegeneinander verpresst werden. Mittels des einstückig geschlossenen Ringprofils wird eine radiale Verpressung und Einspannung der Rohrleitung an deren umgeformten Verbindungsabschnitt zur Erhöhung der Biegewechselfestigkeit ermöglicht.

Trotz der Vorteile bei dem aus dem Stand der Technik bekannten Klemmring besteht noch ein Verbesserungspotenzial, nämlich bezüglich der Gleichmäßigkeit der Verpressung und der Einspannung der Rohrleitung an deren umgeformten Verbindungsabschnitt, bezüglich der Biegewechselfestigkeit der Rohrverbindung und auch bezüglich der Herstellungskosten der Rohrverbindung. Insbesondere durch die radial geöffneten Ausnehmungen kann es zu geringfügigen Ungleichmäßigkeiten bei der Verpressung und Einspannung und somit auch zu einer entsprechenden Verringerung der Biegewechselfestigkeit der Rohrverbindung kommen.

Der Erfindung liegt die Aufgabe zugrunde, eine Rohrverbindung und einen Klemmring für eine Rohrverbindung zur Verfügung zu stellen, welche die aus dem Stand der Technik bekannten Nachteile überwinden und welche insbesondere eine verbesserte Standzeit, eine verbesserte, insbesondere gleichmäßigere Verpressung und/oder eine vereinfachte Montage ermöglichen.

Die Aufgabe wird erfindungsgemäß durch die Merkmale des kennzeichnenden Teils des Anspruchs 1 gelöst, nämlich dadurch, dass im unverpressten Zustand eine zur Anschlagfläche der Rohrleitung weisende Gegenfläche des Klemmringes der Mittenlängsachse zugewandt ist und einen Anschlag-Winkel größer Null zu einer zur Mittenlängsachse senkrechten Ebene aufweist, wobei im unverpressten Zustand eine zur Spannfläche weisende Anlagefläche des Klemmringes einen Anlage-Winkel zu der zur Mittenlängsachse senkrechten Ebene größer als der Spannflächen-Winkel der Überwurfmutter aufweist, wobei die innere Umfangsfläche einen der Gegenfläche zugewandten Freistell-Bereich und einen der Gegenfläche abgewandten Klemm-Bereich aufweist, wobei ein Durchmesser der inneren Umfangsfläche entgegen einer zur Anschlagfläche hinweisenden Montagerichtung im Freistell-Bereich mit einem Freistell-Winkel zur Mittenlängsachse abnimmt und im Klemm-Bereich mit einem Klemm-Winkel zur Mittenlängsachse zunimmt, wobei eine axiale Länge des Freistell-Bereiches kleiner als eine axiale Länge des Klemm-Bereiches ist.

Somit ist eine verbesserte Standzeit, eine verbesserte, insbesondere gleichmäßigere Verpressung und auch eine vereinfachte Montage ermöglicht. Die Standzeit kann insbesondere durch eine Verbesserung der Biegewechselfestigkeit der Rohrverbindung verlängert werden. Es wirkt durch den vorzugsweise schlitz- und einschnittsfreien Klemmring vollumfänglich eine konstant große Anpresskraft zwischen der Anschlagfläche der Rohrleitung und der Gegenfläche des Klemmrings, was zu der genannten verbesserten Biegewechselfestigkeit der Rohrverbindung führt. Die Montage ist einfach durchführbar, da nur einmalig bei der Verbindung von dem Überwurf-Verschraubungsteil mit dem Anschlussstutzen eine hohe Kraft bzw. ein hohes Moment aufgebracht werden muss.

Der Anschlussstutzen ist vorzugsweise als ein Standardbauteil gemäß der DIN 3861 / ISO 8434-1 ausgebildet. Das Überwurf-Verschraubungsteil ist vorzugsweise als ein Standardbauteil gemäß der DIN 3870 / ISO 8434-1 ausgebildet.

Der Anlage-Winkel, der Klemm-Winkel und der Anschlag-Winkel sind so gewählt, dass der Klemmring durch das Verschrauben des Überwurf-Verschraubungsteils mit dem Anschlussstutzen und die daraus resultierende Kraft zur Verformung gezwungen wird. Insbesondere durch den Anlage-Winkel, welcher größer als der Spannflächen-Winkel ist, wird die Verformung des Klemmrings initiiert und damit seine einspannende Funktion auf die Rohrleitung realisiert.

In einer vorteilhaften Ausführungsform der Erfindung ist im verpressten Zustand der Klemmring derart verformt, dass seine Gegenfläche spaltfrei an der Anschlagfläche der Rohrleitung anliegt und/oder seine Anlagefläche spaltfrei an der Spannfläche des Überwurf-Verschraubungsteils anliegt und/oder der Klemm-Bereich seiner inneren Umfangsfläche spaltfrei am Außenumfang der Rohrleitung anliegt.

Dies verbessert die Stabilität der Rohrverbindung, insbesondere deren Biegewechselfestigkeit. Vorzugsweise sind alle diese Verbindungen im verpressten Zustand spaltfrei ausgeführt. Insbesondere ist der Klemmring im verpressten Zustand derart verformt, dass seine Gegenfläche spaltfrei an der Anschlagfläche der Rohrleitung anliegt und seine Anlagefläche spaltfrei an der Spannfläche des Überwurf-Verschraubungsteils anliegt und der Klemm-Bereich seiner inneren Umfangsfläche spaltfrei am Außenumfang der Rohrleitung anliegt.

Weiter bevorzugt ist der Klemmring im verpressten Zustand derart verformt, dass seine Gegenfläche vollflächig an der Anschlagfläche der Rohrleitung anliegt und/oder seine Anlagefläche vollflächig an der Spannfläche des Überwurf-Verschraubungsteils anliegt und/oder der Klemm-Bereich seiner inneren Umfangsfläche vollflächig am Außenumfang der Rohrleitung anliegt.

Dabei ist denkbar, dass an den Enden der jeweiligen Flächen aufgrund von Abrundungen in entsprechend kleinen Bereichen im verpressten Zustand ein Abstand zwischen den jeweils gegenüberliegen Flächen ausgebildet ist, wobei trotzdem von der spaltfreien Ausführung bzw. dem vollflächigen Anliegen gesprochen werden kann.

In einer vorteilhaften Ausführungsform der Erfindung weist das Ringprofil des Klemmrings über den gesamten Umfang einen gleichen Querschnitt auf und/oder der Klemmring ist als Rotationskörper ausgebildet.

Der Klemmring ist somit vorzugsweise geschlossen, schlitzfrei und auch einschnittsfrei ausgeführt. Der Klemmring ist um die Mittenlängsachse herum um 360° rotationssymmetrisch ausgebildet. Die Gleichmäßigkeit des Einspannverhaltens des Klemmringes ist somit weiter verbessert. Somit ist dann auch die Biegewechselfestigkeit der Rohrverbindung weiter erhöht. Vorzugsweise bildet sich zwischen der Anschlagfläche der Rohrleitung und der Gegenfläche des Klemmringes im verpressten Zustand eine ringförmige Kontaktfläche aus.

Die Mittenlängsachse der Rohrverbindung liegt im montierten Zustand der Einzelteile der Rohrverbindung deckungsgleich zu den Mittenlängsachsen dieser Einzelteile, nämlich der Mittenlängsachse der Rohrleitung, der Mittenlängsachse des Anschlussstutzens, der Mittenlängsachse des Überwurf-Verschraubungsteils und der Mittenlängsachse des Klemmrings.

In einer vorteilhaften Ausführungsform der Erfindung weist der Anschlag-Winkel der Gegenfläche in dem unverpressten Zustand des Klemmrings einen Wert von 1° bis 10°, vorzugsweise von 5°, zu der zur Mittenlängsachse senkrechten Ebene auf.

Die Gleichmäßigkeit des Einspannverhaltens des Klemmrings ist somit weiter verbessert. Somit ist dann auch die Biegewechselfestigkeit der Rohrverbindung weiter erhöht.

In einer vorteilhaften Ausführungsform der Erfindung ist der Anlage-Winkel im unverpressten Zustand des Klemmrings um bis zu 15° größer, vorzugsweise um 5° größer, als der Spannflächen-Winkel.

Die Gleichmäßigkeit des Einspannverhaltens des Klemmrings ist somit weiter verbessert. Somit ist dann auch die Biegewechselfestigkeit der Rohrverbindung weiter erhöht.

In einer vorteilhaften Ausführungsform der Erfindung weist der Anlage-Winkel der Anlagefläche in dem unverpressten Zustand des Klemmrings einen Wert von 45° bis 60°, vorzugsweise von 50°, zu der zur Mittenlängsachse senkrechten Ebene auf.

Die Gleichmäßigkeit des Einspannverhaltens des Klemmrings ist somit weiter verbessert. Somit ist dann auch die Biegewechselfestigkeit der Rohrverbindung weiter erhöht.

In einer vorteilhaften Ausführungsform der Erfindung weist der Klemm-Bereich der inneren Umfangsfläche in dem unverpressten Zustand des Klemmrings einen Klemm-Winkel von 1° bis 10°, vorzugsweise von 5°, zur Mittenlängsachse auf.

Die Gleichmäßigkeit des Einspannverhaltens des Klemmrings ist somit weiter verbessert. Somit ist dann auch die Biegewechselfestigkeit der Rohrverbindung weiter erhöht.

In einer vorteilhaften Ausführungsform der Erfindung weist der Spannflächen-Winkel der Spannfläche des Überwurf-Verschraubungsteils einen Wert von 40° bis 50°, vorzugsweise von 45°, zu der zur Mittenlängsachse senkrechten Ebene auf.

Das Überwurf-Verschraubungsteil ist insbesondere als Mutter ausgebildet. Insbesondere wird eine Mutter mit einem solchen Spannflächen-Winkel von vorzugsweise 45° gemäß der DIN 3870 / ISO 8434-1 ausgewählt.

Insbesondere wird ein Überwurf-Verschraubungsteil mit dem Spannflächen-Winkel von 45° in Kombination mit einem Anlage-Winkel der Anlagefläche in dem unverpressten Zustand des Klemmrings mit einem Wert von 50° in der Rohrverbindung eingesetzt, so dass ein Freiraum zwischen der Spannfläche des Überwurf-Verschraubungsteils und der Anlagefläche des Klemmrings einen Wert von 5° aufweist.

Der Anlage-Winkel, der Klemm-Winkel und der Anschlag-Winkel weisen vorzugsweise gleich große Werte von vorzugsweise jeweils 2° bis 15°, insbesondere von jeweils 5°, auf. Die Größe der Winkel wird in Abhängigkeit des Materials des Klemmrings und der benachbarten Bauteile, insbesondere deren plastischen und elastischen Verformbarkeit, gewählt. Durch solche gleich großen Werte der Winkel kann eine gleichmäßige Verformung des Klemmrings beim Verpressen erreicht werden, so dass übermäßige, festigkeitsmindernde Kaltverfestigungen vermieden sind.

In einer vorteilhaften Ausführungsform der Erfindung weist die innere Umfangsfläche zwischen dem Freistell-Bereich und dem Klemm-Bereich einen Haltebereich konstanten Durchmessers auf. Somit ist ein Positionieren des Klemmrings am Außenumfang der Rohrleitung vor dem Verpressen erleichtert. Dabei wird durch den Haltebereich sichergestellt, dass die Mittenlängsachse des Klemmrings deckungsgleich zur Mittenlängsachse der Rohrleitung liegt. Ein unerwünschtes Verkanten bzw. ungleichmäßiges Verkippen des Klemmrings beim Verpressen ist somit erfolgreich vermieden.

In einer vorteilhaften Ausführungsform der Erfindung weist der Freistell-Bereich der inneren Umfangsfläche in dem unverpressten Zustand und/oder dem verpressten Zustand des Klemmrings einen Freistell-Winkel von 5° bis 22,5°, vorzugsweise von 15°, zur Mittenlängsachse auf.

Der Verbindungsabschnitt der Rohrleitung ist vorzugsweise durch eine Umformung hergestellt. Im Bereich der Umformung entsteht durch den Vorgang des Umformens eine starke Kaltverfestigung im Material der Rohrleitung, wobei die Rohrleitung vorzugsweise aus Stahl hergestellt ist. Durch zur Umformung genutzte Umformwerkzeuge kann es zu einer Gratbildung, einer Bildung von Aufwürfen und/oder zu Materialanhäufungen kommen, insbesondere in einem dem Klemmring zugewandten Übergangsbereich zwischen der Anschlagfläche und dem Außenumfang der Rohrleitung. Durch den Freistell-Winkel entsteht ein diesem Übergangsbereich zugewandte Freistellung am Klemmring, damit sich der Klemmring über mögliche Grate, Aufwürfe und/oder Materialanhäufungen hinwegschieben lässt.

In einer vorteilhaften Ausführungsform der Erfindung weist der Klemmring an seiner inneren Umfangsfläche eine umlaufende Nut mit vorzugsweise kreissektorförmigem Nutquerschnitt auf. Diese Nut erleichtert die Verformung des Rings, so dass das Verpressen mit geringeren Kräften möglich ist. Die Nut verkleinert nicht die Anlagefläche und auch nicht die Gegenfläche des Klemmrings.

Zweckmäßig ist das Überwurf-Verschraubungsteil als eine Schraubmutter mit einem außenliegenden Werkzeugangriff, insbesondere als eine Sechskantmutter ausgebildet. Die Schraubmutter ist vielseitig einsetzbar und leicht montier- sowie demontierbar.

Die Aufgabe wird erfindungsgemäß auch durch die Merkmale des Anspruchs 12 gelöst, nämlich dadurch, dass der Klemmring zumindest zum Teil die Merkmale des Klemmrings der vorangehend beschriebenen Rohrverschraubung aufweist.

Die zur Rohrverbindung beschriebenen Vorteile gelten sinngemäß auch für diesen Klemmring.

Besonders vorteilhaft für die Herstellung hat sich gezeigt, dass zumindest der Klemmring aus einem Automatenstahl, insbesondere 11SMnPb30+C nach DIN EN 10277 ausgebildet ist. Zweckmäßig ist der Klemmring aus diesen Stählen besonders gut mit spanenden Fertigungsverfahren, insbesondere auf automatischen Werkzeugmaschinen, zu fertigen.

Weitere vorteilhafte Ausgestaltungen der Erfindung ergeben sich aus der folgenden Figurenbeschreibung und den abhängigen Unteransprüchen.

Es zeigen:
- Fig. 1: schematisch eine erfindungsgemäße Rohrverbindung mit einem erfindungsgemäßen Klemmring gemäß einer ersten Ausführungsform in einem unverpressten Zustand in einer Schnittansicht durch eine die Mittenlängsachse der Rohrverbindung aufweisende Ebene,
- Fig. 2: schematisch die erfindungsgemäße Rohrverbindung gemäß Fig. 1 in einem verpressten Zustand,
- Fig. 3: schematisch eine Detaildarstellung der erfindungsgemäßen Rohrverbindung gemäß Fig. 1 in dem unverpressten Zustand,
- Fig. 4: schematisch eine Detaildarstellung der erfindungsgemäßen Rohrverbindung gemäß Fig. 2 in dem verpressten Zustand,
- Fig. 5: schematisch und separat den Klemmring gemäß seiner ersten Ausführungsform in einer Ansicht auf eine Gegenfläche des Klemmrings,
- Fig. 6: schematisch und separat den Klemmring gemäß seiner ersten Ausführungsform in einer Schnittansicht durch eine die Mittenlängsachse der Rohrverbindung aufweisende Ebene,
- Fig. 7: schematisch eine Detaildarstellung des Klemmringes des Ausschnitts A aus Fig. 6 im unverpressten Zustand des Klemmrings,
- Fig. 8: schematisch eine Detaildarstellung des Klemmrings analog zum Ausschnitt A aus Fig. 6, aber demgegenüber im verpressten Zustand des Klemmrings, und
- Fig. 9: schematisch eine Detaildarstellung eines Klemmrings gemäß einer zweiten Ausführungsform analog zur Darstellung aus Fig. 8 mit dem Klemmring im verpressten Zustand.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

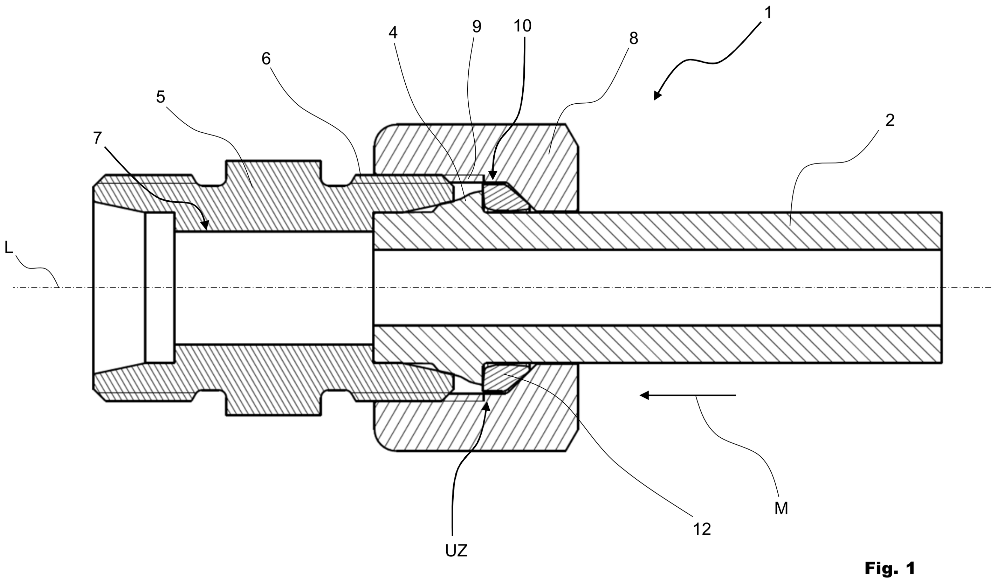

Fig. 1 bis Fig. 4 zeigen jeweils zumindest zum Teil eine Rohrverbindung 1 mit einer Rohrleitung 2, mit einem Anschlussstutzen 5, mit einem Überwurf-Verschraubungsteil 8 und mit einem Klemmring 12. Die Rohrleitung 2 weist einen umgeformten, eine Anschlagfläche 3 aufweisenden Verbindungsabschnitt 4 auf. Der Verbindungsabschnitt 4 nimmt entgegen einer Montagerichtung M kegelstumpfförmig zu und bildet dort an seiner Außenumfangsfläche eine umlaufende Dichtfläche 20. Weiterhin weist der Verbindungsabschnitt 4 eine sich an die Dichtfläche 20 anschließende Schulter mit der Anschlagfläche 3 auf.

Der Anschlussstutzen 5 weist ein Anschlussgewinde 6 und eine Anschlussbohrung 7 auf. Die Anschlussbohrung 7 des Anschlussstutzens 5 nimmt von ihrer Öffnung mit einem Kegelwinkel korrespondierend zum kegelstumpfförmigen Verbindungsabschnitt 4 der Rohrleitung 2 im Bereich der Dichtfläche 20 angepasst kegelstumpfförmig ab. Insbesondere beträgt der Kegelwinkel 24°. Dabei bildet die Anschlussbohrung 7 dort am Innenumfang eine umlaufende Anschlussfläche 21, insbesondere einen Rohranschlag, zur Anlage an der Dichtfläche 20. Die Anschlussbohrung 7 ist insbesondere als eine Durchgangsbohrung durch den Anschlussstutzen 5 hindurch ausgebildet, welche sich vorzugsweise entlang einer Mittenlängsachse L der Rohrverbindung 1 erstreckt.

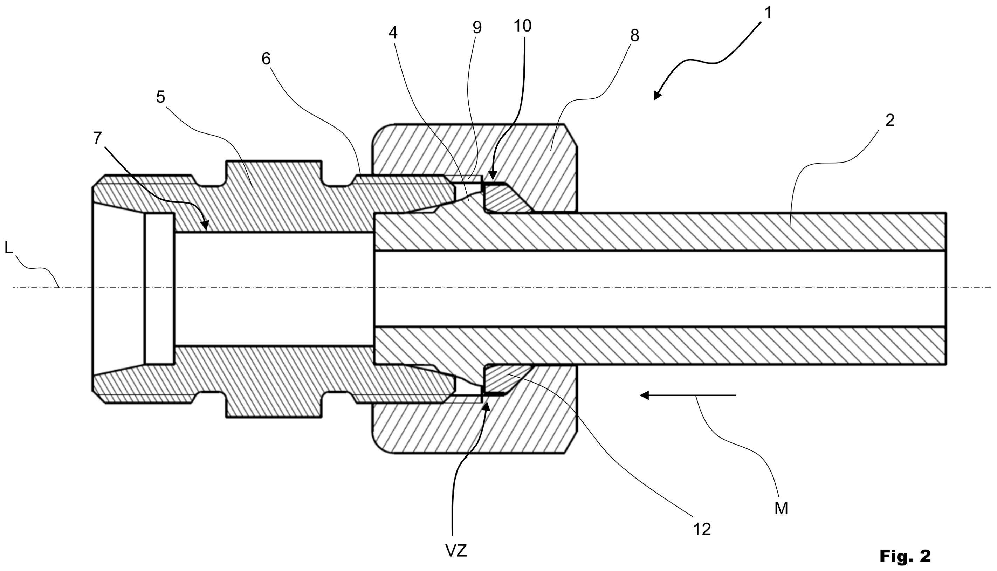

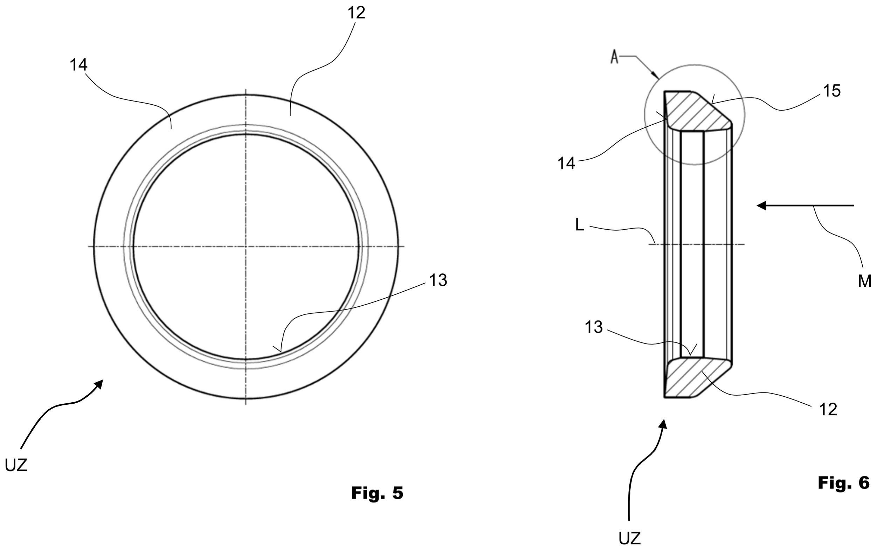

Das Überwurf-Verschraubungsteil 8 weist ein Spanngewinde 9 und eine Durchgangsöffnung 10 auf. Die Durchgangsöffnung 10 weist am Innenumfang eine Spannfläche 11 auf. Die Spannfläche 11 ist einer Mittenlängsachse L der Rohrverbindung 1 zugewandt und weist einen Spannflächen-Winkel ε zu einer zur Mittenlängsachse L senkrechten Ebene E auf. Der ein einstückig geschlossenes Ringprofil aufweisende Klemmring 12 ist mit einer inneren Umfangsfläche 13 zur Rohrleitung 2 weisend in der Durchgangsöffnung 10 des Überwurf-Verschraubungsteils 8 zwischen der Spannfläche 11 des Überwurf-Verschraubungsteils 8 und der Anschlagfläche 3 der Rohrleitung 2 angeordnet. Der Klemmring 12 ist durch Verbinden des Überwurf-Verschraubungsteils 8 mit dem Anschlussstutzen 5 mit Hilfe des Anschlussgewindes 6 und des Spanngewindes 9 von einem unverpressten Zustand UZ in einen verpressten Zustand VZ plastisch und/oder elastisch verformbar. Fig. 5 bis Fig. 8 zeigen den Klemmring 12 jeweils separat. Fig. 1, Fig. 3, Fig. 5, Fig. 6 und Fig. 7 zeigen den unverpressten Zustand UZ. Fig. 2, Fig. 4 und Fig. 8 zeigen den verpressten Zustand VZ.

Die Gegenfläche 14 des Klemmrings 12 ist zur Anlage an der Anschlagfläche 3 des Verbindungsabschnitts 4 der Rohrleitung 2 vorgesehen. Die Anlagefläche 15 des Klemmrings 12 ist zur Anlage an der Spannfläche 11 des Überwurf-Verschraubungsteils 8 vorgesehen.

Im unverpressten Zustand UZ ist eine zur Anschlagfläche 3 der Rohrleitung 2 weisende Gegenfläche 14 des Klemmrings 12 auch der Mittenlängsachse L zugewandt. Die Gegenfläche 14 weist einen Anschlag-Winkel γ größer Null zu einer zur Mittenlängsachse L senkrechten Ebene E auf. Im unverpressten Zustand UZ weist eine zur Spannfläche 11 weisende Anlagefläche 15 des Klemmrings 12 einen Anlage-Winkel α zu der zur Mittenlängsachse L senkrechten Ebene E auf, der größer als der Spannflächen-Winkel ε ist. Die innere Umfangsfläche 13 weist einen der Gegenfläche 14 zugewandten Freistell-Bereich 16 und einen der Gegenfläche 14 abgewandten Klemm-Bereich 17 auf. Ein Durchmesser der inneren Umfangsfläche 13 nimmt entgegen einer zur Anschlagfläche 3 hinweisenden Montagerichtung M im Freistell-Bereich 16 mit einem Freistell-Winkel δ zur Mittenlängsachse L ab und im Klemm-Bereich 17 mit einem Klemm-Winkel β zur Mittenlängsachse L zu. Eine axiale Länge l₁₆ des Freistell-Bereiches 16 ist kleiner als eine axiale Länge l₁₇ des Klemm-Bereiches 17. Die axiale Länge l₁₆ des Freistell-Bereiches 16 weist vorzugsweise einen Wert von ca. 1/4 bis ca. 1/2, insbesondere von 1/3, der axialen Länge des gesamten Klemmrings 12 auf.

Im verpressten Zustand ist die Rohrleitung 2 mit ihrer Dichtfläche 20 in Montagerichtung M weisend gegen die Anschlussfläche 21 des Anschlussstutzens 5 verspannt. Der Anschlussstutzen 5 kann im Sinne der Erfindung Teil eines Verbinders sein, welcher, wie in den Fig. 1 und Fig. 2 dargestellt, beidseitig einer Mittelachse jeweils einen Anschlussstutzen 5 zum Verbinden mit einer Rohrleitung 2 aufweist. Weiterhin kann der Anschlussstutzen 5 auch Teil eines Sammelbehälters oder eines Aggregats oder eines anderen Elementes eines Leitungssystems sein.

Die Mittenlängsachse L der Rohrverbindung 1 liegt im montierten Zustand der Einzelteile der Rohrverbindung 1 deckungsgleich zu den Mittenlängsachsen L dieser Einzelteile, nämlich der Mittenlängsachse L der Rohrleitung 2, der Mittenlängsachse L des Anschlussstutzens 5, der Mittenlängsachse L des Überwurf-Verschraubungsteils 8 und der Mittenlängsachse L des Klemmrings 12.

Im verpressten Zustand VZ ist der Klemmring 12 derart verformt, dass seine Gegenfläche 14 spaltfrei an der Anschlagfläche 3 der Rohrleitung 2 anliegt und/oder seine Anlagefläche 15 spaltfrei an der Spannfläche 11 des Überwurf-Verschraubungsteils 8 anliegt und/oder der Klemm-Bereich 17 seiner inneren Umfangsfläche 13 spaltfrei am Außenumfang der Rohrleitung 2 anliegt.

Die Gegenfläche 14 ragt gemäß Fig. 1 bis Fig. 4 in radialer Richtung über die Anschlagfläche 3 hinaus und weist somit einen größeren maximalen Außendurchmesser auf als die Rohrleitung 2 im Verbindungsabschnitt 4. Zwischen der Anschlagfläche 3 und der Gegenfläche 14 ist im verpressten Zustand eine ringförmige Kontaktfläche ausgebildet.

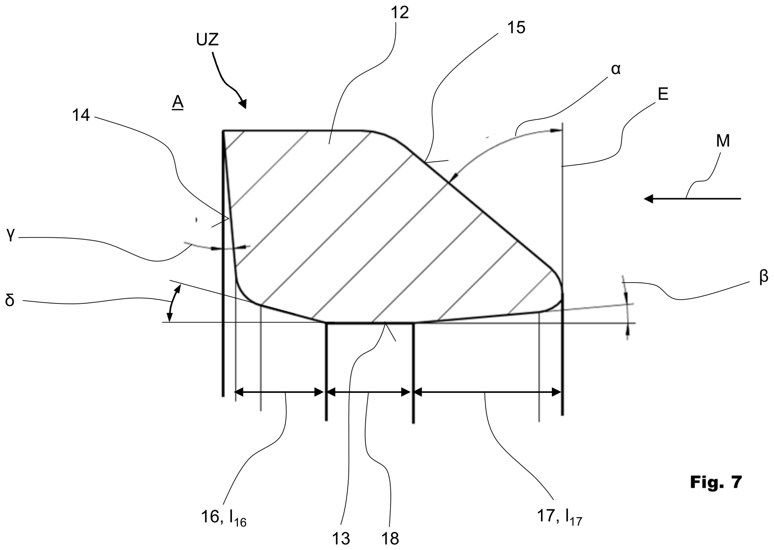

Das Ringprofil des Klemmrings 12 weist über den gesamten Umfang einen gleichen Querschnitt auf und/oder der Klemmring 12 ist als Rotationskörper ausgebildet. Der Klemmring 12 ist durch Rotation des z. B. in Fig. 7, Fig. 8 oder Fig. 9 gezeigten Profilquerschnitts des Klemmrings 12 um die Mittenlängsachse L des Klemmrings 12 gebildet.

Der Anschlag-Winkel γ der Gegenfläche 14 weist in dem unverpressten Zustand UZ des Klemmrings 12 einen Wert von 1° bis 10°, vorzugsweise von 5°, zu der zur Mittenlängsachse L senkrechten Ebene E auf.

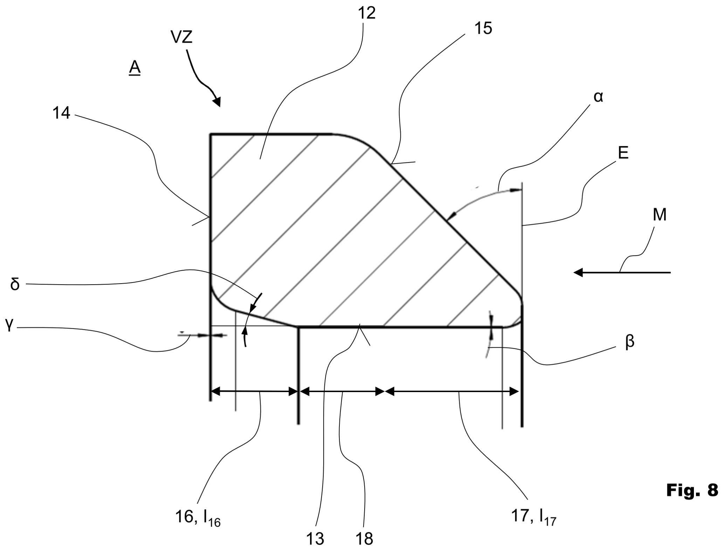

Insbesondere ist die Anschlagfläche 3 der Rohrleitung 2 in dem unverpressten Zustand UZ wie auch dem verpressten Zustand VZ des Klemmrings 12 senkrecht zur Mittenlängsachse L ausgerichtet. Insbesondere ist dann auch die Gegenfläche 14 in dem verpressten Zustand des Klemmrings 12 senkrecht zur Mittenlängsachse L ausgerichtet. Der Anschlag-Winkel γ weist in dem verpressten Zustand VZ des Klemmrings 12 dann einen Wert von 0° zu der zur Mittenlängsachse L senkrechten Ebene E auf, wie Fig. 8 beispielhaft zeigt.

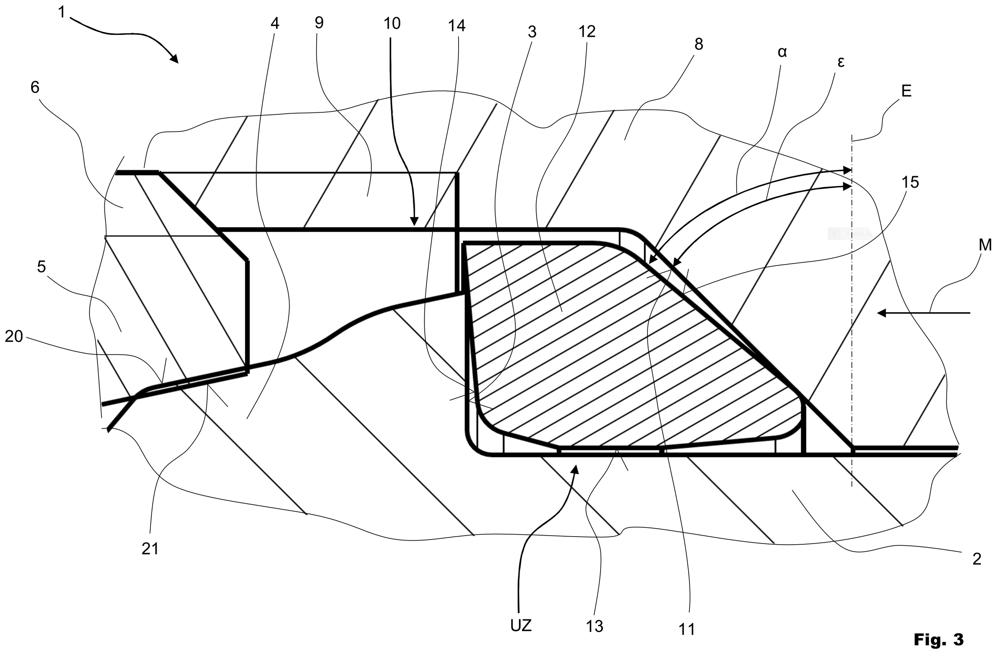

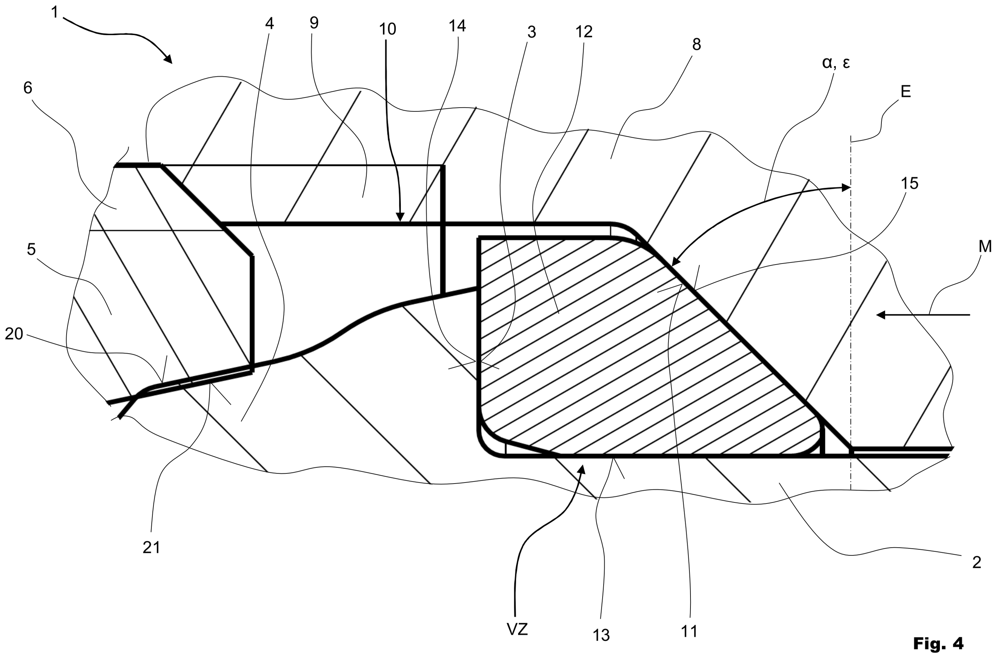

Der Anlage-Winkel α ist im unverpressten Zustand UZ des Klemmrings 12 um bis zu 15° größer, vorzugsweise um 5° größer, als der Spannflächen-Winkel ε, wie insbesondere in Fig. 3 gezeigt ist. Der Anlage-Winkel α ist im verpressten Zustand VZ des Klemmrings 12 gleich dem Spannflächen-Winkel ε, wie insbesondere in Fig. 4 gezeigt ist. Der Klemmring 12 ist ausgebildet, sich durch das Verpressen an die Spannfläche 11 des Überwurf-Verschraubungsteils 8 anzulegen. Vorzugsweise ist der Klemmring 12 deutlich leichter verformbar, so dass sich beim Verpressen der Klemmring 12 verformt, die Rohrleitung 2, der Anschlussstutzen 5 und das Überwurf-Verschraubungsteils 8 aber ihre Form beibehalten oder sich nur deutlich weniger stark verformen. Diese "leichtere" Verformbarkeit des Klemmrings 12 ist durch die konstruktive Gestaltung und/oder die Materialwahl der Bauteile der Rohrverbindung 1 realisiert.

Der Anlage-Winkel α der Anlagefläche 15 weist in dem unverpressten Zustand UZ des Klemmrings 12 einen Wert von 45° bis 60°, vorzugsweise von 50°, zu der zur Mittenlängsachse L senkrechten Ebene E auf. Insbesondere Fig. 7 zeigt beispielhaft den Anlage-Winkel α von 50° im unverpressten Zustand UZ. Der Anlage-Winkel α der Anlagefläche 15 weist in dem verpressten Zustand VZ des Klemmrings 12 einen Wert zu der zur Mittenlängsachse L senkrechten Ebene E auf, der dem Wert des Spannflächen-Winkels ε der Spannfläche 11 des Überwurf-Verschraubungsteils 8 entspricht.

Der Klemm-Bereich 17 der inneren Umfangsfläche 13 weist in dem unverpressten Zustand UZ des Klemmrings 12 einen Klemm-Winkel β von 1° bis 10°, vorzugsweise von 5°, zur Mittenlängsachse L auf. Insbesondere Fig. 7 zeigt beispielhaft den Klemm-Winkel β von 5° in dem unverpressten Zustand UZ. Die innere Umfangsfläche 13 ist im Klemm-Bereich 17 in dem unverpressten Zustand UZ des Klemmrings 12 vorzugsweise kegelstumpfförmig ausgebildet. Der Klemm-Winkel β weist in dem verpressten Zustand VZ des Klemmrings 12 einen Wert von 0° zur Mittenlängsachse L auf, wie Fig. 8 beispielhaft zeigt.

Der Spannflächen-Winkel ε der Spannfläche 11 des Überwurf-Verschraubungsteils 8 weist einen Wert von 40° bis 50°, vorzugsweise von 45°, zu der zur Mittenlängsachse L senkrechten Ebene E auf. Der Anlage-Winkel α der Anlagefläche 15 weist in dem verpressten Zustand VZ des Klemmrings 12 dann korrespondierend einen Wert von 40° bis 50°, vorzugsweise von 45°, zu der zur Mittenlängsachse L senkrechten Ebene E auf, insbesondere wie Fig. 8 beispielhaft zeigt, eben den Wert von 45°.

Die innere Umfangsfläche 13 weist zwischen dem Freistell-Bereich 16 und dem Klemm-Bereich 17 einen Haltebereich 18 konstanten Durchmessers auf. Im verpressten Zustand VZ weist der Klemm-Bereich 17, wie Fig. 8 zeigt, einen gleich großen, konstanten Durchmesser wie der Haltebereich 18 auf. Der Haltebereich 18 geht im verpressten Zustand VZ ohne Winkeländerung in den Klemmbereich 17 über.

Der Freistell-Bereich 16 der inneren Umfangsfläche 13 weist in dem unverpressten Zustand UZ und/oder dem verpressten Zustand VZ des Klemmrings 12 einen Freistell-Winkel δ von 5° bis 22,5°, vorzugsweise von 15°, zur Mittenlängsachse L auf. Der Freistell-Winkel δ ändert sich beim Verpressen nicht oder nur geringfügig. Durch den Freistell-Winkel δ entsteht eine Freistellung am Klemmring 12, damit sich der Klemmring 12 über mögliche Grate, Aufwürfe und/oder Materialanhäufungen an der Rohrleitung 2 hinwegschieben lässt, welche ein gleichmäßiges Anliegen und Anpressen der Gegenfläche 14 des Klemmringes 12 an die Anschlagfläche 3 der Rohrleitung 2 stören könnten. Die Freistellung ist als ein sich zur Anschlagfläche 3 hin erweiternder Freiraum gebildet. Des Weiteren kann die Freistellung auch durch eine im Querschnitt zumindest teils runde oder gekrümmte Form oder - im Extremfall - durch eine im Querschnitt rechteckige Ausklinkung erzeugt werden, welche sich im unverpressten Zustand UZ und/oder verpressten Zustand VZ des Klemmrings 12 ergibt. Der genannte Extremfall der im Querschnitt rechteckigen Ausklinkung würde einem Freistell-Winkel δ von 90° zur Mittenlängsachse L entsprechen. Jede Form der Freistellung, die die Aufgabe der Freistellung erfüllt, nämlich die genannte Möglichkeit des Hinwegschiebens über Grate, Aufwürfe und/oder Materialanhäufungen, ist möglich.

Im Folgenden wird nun die Montage der Rohrverbindung 1 beschrieben. Der Klemmring 12 legt sich durch die Verschraubung des Spanngewindes 9 des Überwurf-Verschraubungsteils 8 mit dem Anschlussgewinde 6 des Anschlussstutzens 5 und die dabei wirkenden Kräfte an die Spannfläche 11 des Überwurf-Verschraubungsteils 8 an. Daraus resultiert eine Verformung des Klemmrings 12, die zur Einspannung der Rohrleitung 2 führt, wobei sich der Klemm-Bereich 17 an den Außenumfang der Rohrleitung 2 anlegt. Ebenso wird durch die vor der Verpressung mit dem Anschlag-Winkel γ schräge Gegenfläche 14 des Klemmrings 12, die im Kontakt zum Verbindungsabschnitt 4 der Rohrleitung 2 steht, ein weiteres Kippmoment in den Klemmring 12 eingeleitet, das die Verformung des Klemmrings 12 weiter begünstigt.

Die über das Überwurf-Verschraubungsteil 8 eingebrachte Kraft verformt den Klemmring 12. Der Anlage-Winkel α mit ursprünglich beispielhaft 50° nimmt im montierten, verpressten Zustand ZV passend zum Überwurf-Verschraubungsteil 8 einen Wert von beispielhaft etwa 45° an. Durch diese Verformung schließt sich der Klemm-Winkel β beispielhaft um etwa 5°, bis es zur Anlage des Klemm-Bereiches 17 des Klemmrings 12 an der Rohrleitung 2 kommt. Der Anschlag-Winkel γ schließt sich ebenfalls bis zur vollständigen Anlage des Klemmrings 12 an der Anschlagfläche 3 der Rohrleitung 2. Die drei Winkel α, β und γ erfahren beim Verpressen somit alle vorzugsweise eine Winkeländerung um etwa 5°.

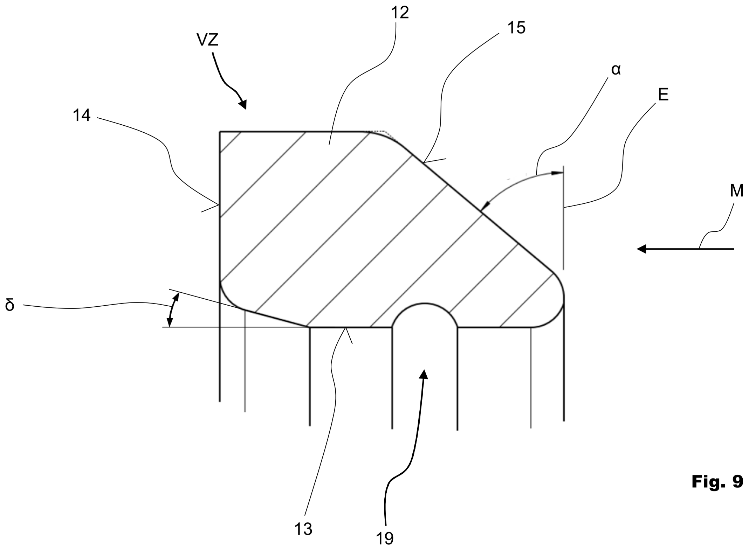

Der Klemmring 12 weist gemäß seiner zweiten Ausführungsform aus Fig. 9 an seiner inneren Umfangsfläche 13 eine umlaufende Nut 19 mit vorzugsweise kreissektorförmigem Nutquerschnitt auf. Die Nut 19 liegt in einer senkrecht zur Mittenlängsachse L liegenden Ebene E. Fig. 9 zeigt den Klemmring in einem verpressten Zustand VZ, so dass die innere Umfangsfläche 13 auf beiden Seiten der Nut 19 an dem Außenumfang der hier nicht gezeigten Rohrleitung 2 anliegt.

Erfindungsgemäß weist der Klemmring 12 die erfindungsgemäßen Merkmale des Klemmrings 12 gemäß der vorgenannten erfindungsgemäßen Rohrverbindung 1 auf. Erfindungsgemäße Klemmringe 12 sind ebenfalls zum Nachrüsten in bekannte, sich im Einsatz befindende Rohrverbindungen 1 geeignet.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Rohrverbindung
- 2: Rohrleitung
- 3: Anschlagfläche der Rohrleitung 2
- 4: Verbindungsabschnitt der Rohrleitung 2
- 5: Anschlussstutzen
- 6: Anschlussgewinde des Anschlussstutzens 5
- 7: Anschlussbohrung des Anschlussstutzens 5
- 8: Überwurf-Verschraubungsteil
- 9: Spanngewinde des Überwurf-Verschraubungsteils 8
- 10: Durchgangsöffnung des Überwurf-Verschraubungsteils 8
- 11: Spannfläche des Überwurf-Verschraubungsteils 8
- 12: Klemmring
- 13: inneren Umfangsfläche des Klemmrings 12
- 14: Gegenfläche des Klemmringes 12
- 15: Anlagefläche des Klemmringes 12
- 16: Freistell-Bereich der inneren Umfangsfläche 13 des Klemmrings 12
- 17: Klemm-Bereich der inneren Umfangsfläche 13 des Klemmrings 12
- 18: Halte-Bereich der inneren Umfangsfläche 13 des Klemmrings 12
- 19: Nut des Klemmrings 12
- 20: Dichtfläche des Verbindungsabschnitts 4 der Rohrleitung 2
- 21: Anschlussfläche des Anschlussstutzens 5

- L: Mittenlängsachse
- E: zur Mittenlängsachse L senkrechte Ebene
- M: Montagerichtung des Klemmringes 12
- α: Anlage-Winkel
- β: Klemm-Winkel
- γ: Anschlag-Winkel
- δ: Freistell-Winkel
- ε: Spannflächen-Winkel

- l₁₆: axiale Länge des Freistell-Bereiches 16
- l₁₇: axiale Länge des Klemm-Bereiches 17

- UZ: unverpresster Zustand des Klemmringes 12
- VZ: verpresster Zustand des Klemmringes 12

## Patentansprüche

1. Rohrverbindung (1) aufweisend
- eine Rohrleitung (2) mit einem umgeformten, eine Anschlagfläche (3) aufweisenden Verbindungsabschnitt (4),
- und einen Anschlussstutzen (5) mit einem Anschlussgewinde (6) und mit einer Anschlussbohrung (7),
- und ein Überwurf-Verschraubungsteil (8) mit einem Spanngewinde (9) und mit einer Durchgangsöffnung (10), die am Innenumfang eine Spannfläche (11) aufweist, wobei die Spannfläche (11) einer Mittenlängsachse (L) der Rohrverbindung (1) zugewandt ist und einen Spannflächen-Winkel (ε) zu einer zur Mittenlängsachse (L) senkrechten Ebene (E) aufweist,
- und einen ein einstückig geschlossenes Ringprofil aufweisenden Klemmring (12), welcher mit einer inneren Umfangsfläche (13) zur Rohrleitung (2) weisend in der Durchgangsöffnung (10) des Überwurf-Verschraubungsteils (8) zwischen der Spannfläche (11) des Überwurf-Verschraubungsteils (8) und der Anschlagfläche (3) der Rohrleitung (2) angeordnet ist, und wobei der Klemmring (12) durch Verbinden des Überwurf-Verschraubungsteils (8) mit dem Anschlussstutzen (5) mit Hilfe des Anschlussgewindes (6) und des Spanngewindes (9) von einem unverpressten Zustand (UZ) in einen verpressten Zustand (VZ) plastisch und/oder elastisch verformbar ist,
**dadurch gekennzeichnet, dass**
im unverpressten Zustand (UZ) eine zur Anschlagfläche (3) der Rohrleitung (2) weisende Gegenfläche (14) des Klemmrings (12) der Mittenlängsachse (L) zugewandt ist und einen Anschlag-Winkel (γ) größer Null zu einer zur Mittenlängsachse (L) senkrechten Ebene (E) aufweist, wobei im unverpressten Zustand (UZ) eine zur Spannfläche (11) weisende Anlagefläche (15) des Klemmringes (12) einen Anlage-Winkel (α) zu der zur Mittenlängsachse (L) senkrechten Ebene (E) größer als der Spannflächen-Winkel (ε) aufweist, wobei
die innere Umfangsfläche (13) einen der Gegenfläche (14) zugewandten Freistell-Bereich (16) und einen der Gegenfläche (14) abgewandten Klemm-Bereich (17) aufweist, wobei ein Durchmesser der inneren Umfangsfläche (13) entgegen einer zur Anschlagfläche (3) hinweisenden Montagerichtung (M) im Freistell-Bereich (16) mit einem Freistell-Winkel (δ) zur Mittenlängsachse (L) abnimmt und im Klemm-Bereich (17) mit einem Klemm-Winkel (β) zur Mittenlängsachse (L) zunimmt, wobei eine axiale Länge (l₁₆) des Freistell-Bereiches (16) kleiner als eine axiale Länge (l₁₇) des Klemm-Bereiches (17) ist.

2. Rohrverbindung (1) nach Anspruch 1,
**dadurch gekennzeichnet, dass** im verpressten Zustand (VZ) der Klemmring (12) derart verformt ist, dass seine Gegenfläche (14) spaltfrei an der Anschlagfläche (3) der Rohrleitung (2) anliegt und/oder
seine Anlagefläche (15) spaltfrei an der Spannfläche (11) des Überwurf-Verschraubungsteils (8) anliegt und/oder
der Klemm-Bereich (17) seiner inneren Umfangsfläche (13) spaltfrei am Außenumfang der Rohrleitung (2) anliegt.

3. Rohrverbindung (1) nach Anspruch 1 oder 2,
**dadurch gekennzeichnet, dass** das Ringprofil des Klemmrings (12) über den gesamten Umfang einen gleichen Querschnitt aufweist und/oder der Klemmring (12) als Rotationskörper ausgebildet ist.

4. Rohrverbindung (1) nach einem der Ansprüche 1 bis 3,
**dadurch gekennzeichnet, dass** der Anschlag-Winkel (γ) der Gegenfläche (14) in dem unverpressten Zustand (UZ) des Klemmrings (12) einen Wert von 1° bis 10°, vorzugsweise von 5°, zu der zur Mittenlängsachse (L) senkrechten Ebene (E) aufweist.

5. Rohrverbindung (1) nach einem der Ansprüche 1 bis 4,
**dadurch gekennzeichnet, dass** der Anlage-Winkel (α) im unverpressten Zustand (UZ) des Klemmrings (12) um bis zu 15° größer, vorzugsweise um 5° größer, als der Spannflächen-Winkel (ε) ist.

6. Rohrverbindung (1) nach einem der Ansprüche 1 bis 5,
**dadurch gekennzeichnet, dass** der Anlage-Winkel (α) der Anlagefläche (15) in dem unverpressten Zustand (UZ) des Klemmrings (12) einen Wert von 45° bis 60°, vorzugsweise von 50°, zu der zur Mittenlängsachse (L) senkrechten Ebene (E) aufweist.

7. Rohrverbindung (1) nach einem der Ansprüche 1 bis 6,
**dadurch gekennzeichnet, dass** der Klemm-Bereich (17) der inneren Umfangsfläche (13) in dem unverpressten Zustand (UZ) des Klemmrings (12) einen Klemm-Winkel (β) von 1° bis 10°, vorzugsweise von 5°, zur Mittenlängsachse (L) aufweist.

8. Rohrverbindung (1) nach einem der Ansprüche 1 bis 7,
**dadurch gekennzeichnet, dass** der Spannflächen-Winkel (ε) der Spannfläche (11) des Überwurf-Verschraubungsteils (8) einen Wert von 40° bis 50°, vorzugsweise von 45°, zu der zur Mittenlängsachse (L) senkrechten Ebene (E) aufweist.

9. Rohrverbindung (1) nach einem der Ansprüche 1 bis 8,
**dadurch gekennzeichnet, dass** die innere Umfangsfläche (13) zwischen dem Freistell-Bereich (16) und dem Klemm-Bereich (17) einen Haltebereich (18) konstanten Durchmessers aufweist.

10. Rohrverbindung (1) nach einem der Ansprüche 1 bis 9,
**dadurch gekennzeichnet, dass** der Freistell-Bereich (16) der inneren Umfangsfläche (13) in dem unverpressten Zustand (UZ) und/oder dem verpressten Zustand (VZ) des Klemmrings (12) einen Freistell-Winkel (δ) von 5° bis 22,5°, vorzugsweise von 15°, zur Mittenlängsachse (L) aufweist.

11. Rohrverbindung (1) nach einem der Ansprüche 1 bis 10,
**dadurch gekennzeichnet, dass** der Klemmring (12) an seiner inneren Umfangsfläche (13) eine umlaufende Nut (19) mit vorzugsweise kreissektorförmigem Nutquerschnitt aufweist.

12. Klemmring (12) für eine Rohrverbindung (1) nach einem der Ansprüche 1 bis 11,
**dadurch gekennzeichnet, dass** der Klemmring (12) die Merkmale des Klemmrings (12) der Rohrverschraubung (1) gemäß zumindest einem der Ansprüche 1 bis 11 aufweist.
